# EUROPEAN PATENT SPECIFICATION

(11) **EP 4 496 364 B1**
(45) Date of publication and mention of the grant of the patent: **09.07.2025**
(21) Application number: 23186321.8
(22) Date of filing: 19.07.2023
(51) Int. Cl.: H04W 8/24, H04W 88/06

(54) **OPERATING A USER EQUIPMENT WITH A RADIO ACCESS NETWORK OF A MOBILE COMMUNICATION NETWORK**
VERFAHREN ZUM BETREIBEN EINES TEILNEHMERGERÄTES MIT EINEM FUNKZUGANGSNETZ EINES MOBILKOMMUNIKATIONSNETZES
FONCTIONNEMENT D'UN ÉQUIPEMENT UTILISATEUR AVEC UN RÉSEAU D'ACCÈS RADIO D'UN RÉSEAU DE COMMUNICATION MOBILE

(43) Date of publication of application: 22.01.2025
(73) Proprietor: Deutsche Telekom AG, 53113 Bonn (DE)
(72) Inventor: COLOM IKUNO, Josep, 2100 Korneuburg (AT); BISCHINGER, Kurt, 1120 Wien (AT)
(74) Representative: Schwöbel, Thilo K.

(56) References cited:
- WO-A1-2023/117148
- LOCKHEED MARTIN ET AL: "FS_DualSteer Use Case on Vehicle IoT devices dual steering via NTN and TN", vol. SA WG1, no. Athens, Greece; 20230220 - 20230224, 24 February 2023 (2023-02-24), XP052249302, Retrieved from the Internet <URL:https://ftp.3gpp.org/Meetings_3GPP_SYNC/SA1/Inbox/S1-230681.docx> [retrieved on 20230224]
- ALAIN SULTAN ET AL: "TR 22.841v1.1.0 Study on Upper layer traffic steering, switching and split over dual 3GPP access", vol. 3GPP SA 1, no. Berlin, DE; 20230522 - 20230526, 5 June 2023 (2023-06-05), XP052383725, Retrieved from the Internet <URL:https://www.3gpp.org/ftp/tsg_sa/WG1_Serv/TSGS1_102_Berlin/Docs/S1-231340.zip S1-231340_22841-110_clean.docx> [retrieved on 20230605]

## Description

### TECHNICAL FIELD

The present invention relates to a method for operating a user equipment with a radio access network of a mobile communication network, wherein the user equipment is enabled to be simultaneously connected to different mobile communication networks that have, or use, different pieces of network identifier information, wherein such different mobile communication networks comprise a first mobile communication network and, at least, a second mobile communication network, wherein the user equipment is enabled to be registered, using a first connection, to the first mobile communication network, and wherein the user equipment is furthermore enabled to be also registered, using a second connection, to at least the second mobile communication network.

Furthermore, the present invention relates to a user equipment for being operated with a radio access network of a mobile communication network, wherein the user equipment is enabled to be simultaneously connected to different mobile communication networks that have, or use, different pieces of network identifier information, wherein such different mobile communication networks comprise a first mobile communication network and, at least, a second mobile communication network, wherein the user equipment is enabled to be registered, using a first connection, to the first mobile communication network, and wherein the user equipment is furthermore enabled to be also registered, using a second connection, to at least the second mobile communication network.

Additionally, the present invention relates to a system or a mobile communication network for operating a user equipment with a radio access network of a mobile communication network, wherein the user equipment is enabled to be simultaneously connected to different mobile communication networks that have, or use, different pieces of network identifier information.

Furthermore, the present invention relates to a program and to a computer-readable medium for operating a user equipment with a radio access network of a mobile communication network according to the inventive method.

### BACKGROUND

In currently deployed mobile communication networks, it is possible that a user equipment is independently connecting to different mobile communication networks, as well as to a single network using simultaneously different access technologies, e.g., simultaneously via or using a 3GPP access and non-3GPP access. It is, however, not possible to efficiently realize integrated connectivity via two different networks simultaneously, also called dual steering, or multiple networks. Document WO 2023 / 117 148 A1 as an example describes an apparatus, a method and a system for steering a device to networks supporting specific network slices.

Possible use cases include, e.g., that the user equipment is simultaneously connecting to a non-terrestrial network (e.g. a satellite-based network) and a terrestrial public land mobile network. Typically such networks have (or use) a different network identifier, such as a public land mobile network identifier information (PLMN IDs) or combination of PLMN ID and network identifier (NID). Furthermore, the user equipment should be enabled to simultaneously connect to such different mobile communication networks using a single set of credentials. E.g., the user equipment might be simultaneously in its home mobile communication network (or home PLMN) and, simultaneously, roaming in another mobile communication network.

However, regarding the following situations or scenarios, such dual steering might be failing:
-- some user equipments may support connectivity to multiple networks and some others not;
-- within the user equipments supporting dual steering, there might be support for some dual steering scenarios but not for others, there might be support for a different number of simultaneous registrations, or the subscriber identity module (SIM card) or universal integrated circuit card may support only certain combinations of networks or scenarios of dual steering;
-- even if the user equipment supports dual steering, it might be the case that the subscriber is not allowed to realize certain combinations, or that the home network does not support such dual steering functionality, or that, in case of roaming, the visited network does not support such dual steering functionality, or, for either home or visited network, the network may not be able to realize certain combinations, e.g. because of regulatory requirements.

Hence, even though in principle a dual steering functionality is able to be realized, there is a considerable number of technical problems and/or situations or scenarios possible where such dual steering (or multiple steering) and/or network connectivity is not able to be effectively deployed.

### SUMMARY

An object of the present invention is to provide a technically simple, effective and cost-effective solution for operating a user equipment with a radio access network of a mobile communication network such that the user equipment - in case the preconditions are met - is not only theoretically enabled but actually enabled to be simultaneously connected to different mobile communication networks that have, or use, different pieces of network identifier information, and wherein furthermore unnecessary attempts to realize or set up dual (or multiple) steering are able to be avoided in cases where such preconditions are not met. A further object of the present invention is to provide a corresponding user equipment, system or mobile communication network, and a corresponding program and computer-readable medium.

The object of the present invention is achieved by a method for operating a user equipment with a radio access network of a mobile communication network according to the features of claim 1.

Especially by means of the user equipment transmitting the capability indication information, and by the user equipment receiving the multiple registration information, it is advantageously possible, according to the present invention, that involved entities are aware of the capabilities and/or limitations (regarding dual steering or multiple steering) of the respective other party, entity or network such as to be able to use, actually and in practice, dual steering (or multiple steering) where this is applicable, especially technically feasible as well as permitted - and, as a consequence, also to be able to efficiently initiate such dual or multiple steering functionality where it is possible -, and to avoid wasting network resources, energy and user equipment resources in trying to initiate dual steering or multiple steering in situations where the respective conditions or requirements are not fulfilled. Hence, according to the present invention, it is advantageously possible to provide a solution how dual steering and multiple steering is able to be applied in practice in an efficient manner (and, especially, attempt to apply such functionality only in cases where, really, the prerequisites are met), and nevertheless provide a backwards-compatible solution, such that a mobile communication network can support both newer user equipments supporting this capability as well as legacy user equipments (e.g. Release 18 and below) that typically do not support this capability. Hence, according to the present invention, it is advantageously possible to add such new functionality of dual steering and/or multiple steering to a mobile communication network in a backwards-compatible manner, i.e. without the consequence that legacy user equipments are impaired.

According to the present invention it is supposed that a user equipment is operated with a radio access network of a mobile communication network. It is furthermore supposed that the user equipment is enabled to be simultaneously connected to different mobile communication networks that have, or use, different pieces of network identifier information. In the context of the present invention, such different mobile communication networks are called a first mobile communication network and, at least, a second mobile communication network. The (considered) user equipment being connected, simultaneously, to two different of such mobile communication networks relates to the so-called dual steering functionality, whereas the (considered) user equipment being connected, simultaneously, to three (or even more) different of such mobile communication networks relates to the so-called multiple steering functionality. All realistically conceivable solutions are addressed according to the present invention, i.e. the use of two mobile communication networks, three mobile communication networks, four mobile communication networks, five mobile communication networks, etc. Hence, according to the present invention, the (considered) user equipment is enabled to be registered, using a first connection, to the first mobile communication network, and it is further enabled to be also registered, using a second connection, to at least the second mobile communication network. Of course, using a third connection, the (considered) user equipment might also be registered to a third mobile communication network. However, the use of such ordinal number (first, second, third mobile communication network, or, first, second, third connection) does not imply a priority or an order of precedence or whether one network is of different relative importance than the other, but merely a means to differentiate and to distinguish the different mobile communication networks or connections: For example, using a 'second connection' (with a second mobile communication network) a user equipment might exchange more data or more important or more critical data or be provided, correspondingly, with more important or more high-volume communication services instead of using a 'first connection' and a first mobile communication network. However, temporally speaking, from a user equipment not being connected at all to the user equipment having both the first and the second connection established, there will typically be one of the connections established first and the other one later.
According to the present invention, in order to be able to actually apply and use dual or multiple steering functionality in practice, it is proposed that the involved entities are mutually informed about the capabilities of the other entity, respectively, especially by means of the user equipment, in a first step, transmitting the capability indication information (the capability indication information comprising at least the piece of information of whether the user equipment supports, or is enabled, to establish both the first connection and the second connection, i.e. supports dual steering functionality) towards, typically, a network node of either the first or the second mobile communication network, and, in a second step, the user equipment receiving the multiple registration information (the multiple registration information comprising at least the piece of information of whether the user equipment is allowed to establish both the first connection and the second connection), likewise typically from a network node of either the first or the second mobile communication network (especially from the one mobile communication network whose network node did receive the capability indication information.

Hence, according to the present invention, it is proposed to introduce a user equipment capability indication and network steering in order to include a dual/multiple steering indication from the user equipment to the mobile communication network (to which the user equipment is connected); typically, the respective mobile communication network decides which multiple access combinations are allowed regarding the requesting user equipment, especially based on the (capability) indication (information) the user equipment did send, the mobile communication network's capability, the subscriber information (e.g. whether the subscriber is allowed, and if yes, how, to dual/multiple connectivity), the existing inter-network agreements and/or available connectivity, as well as the regulatory requirements (e.g. location). As a result thereof, the mobile communication network sends (using the multiple registration information) the allowed combinations to the user equipment (i.e. the combination restrictions), and the user equipment applies the combination restrictions when using multiple network connectivity. It is furthermore proposed according to the present invention that such information or indication is forwarded between networks (especially in the roaming case).

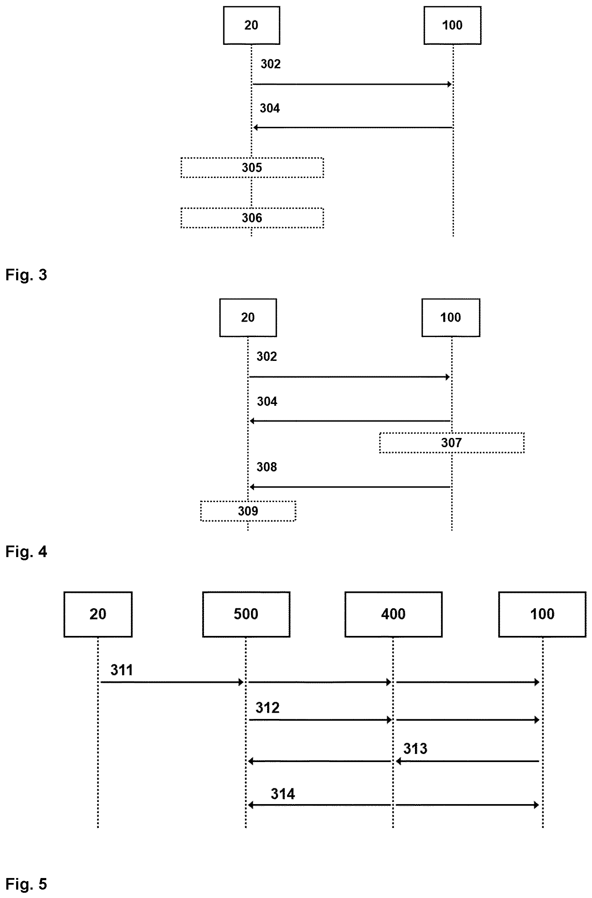

In conventionally known telecommunications networks or mobile communication networks, use cases and scenarios for multiple connectivity of user equipments are already known, e.g. in the following scenarios:
-- dual 5G satellite access for autonomous ship operations: a user equipment on a ship is simultaneously connected to a 5G core mobile communication network via both a low earth orbit (LEO) satellite and a medium earth orbit or a geostationary earth orbit satellite, wherein traffic might be switched due to loss of connection with LEO satellite access network;
-- intra-PLMN scenario: a user equipment in coverage of two radio access networks or radio access technologies (RAN/RATs - e.g. new radio, NR, and long term evolution, LTE);
-- dual steering involving two 3GPP networks, each using satellite access or unmanned aerial vehicle, UAV, (e.g. with a gNodeB on board), cf. TR 22.841, Figure 5.9.1;
-- intra-VPLMN scenario, with home-routed traffic, cf. TR 22.841, Fig.5.12.1;
-- intra-VPLMN scenario, with local breakout, cf. TR 22.841, Fig. 5.12.2;
-- inter-VPLMN scenario, with home-routed traffic, cf. TR 22.841, Fig. 5.12.3;
-- inter-PLMN scenario, with terrestrial and multiple non-terrestrial coverage, cf. TR 22.841, Fig. 5.14.1;
-- a user equipment aboard an unmanned aerial vehicle using terrestrial network and non-terrestrial network access, cf. TR 22.841, Figure 5.18.1.

According to the present invention, it is advantageously possible and preferred that, in a third step subsequent to the second step, the user equipment is simultaneously connected to the first and second mobile communication network using the first and second connection and using a set of credentials,
wherein especially and prior to the third step or subsequent to the third step, and especially repeatedly, the conditions for using the first and second connection are evaluated,
wherein especially this evaluation is performed by the user equipment, or by the first and/or second mobile communication network.

It is thereby advantageously possible to realize and implement the inventive method in a comparatively simple and efficient manner.

According to the present invention, it is advantageously furthermore possible and preferred that the set of credentials used by the user equipment refers to a single set of credentials to connect to both the first mobile communication network and the second mobile communication network, wherein the single set of credentials refers to the first mobile communication network, or to the second mobile communication network or even to a third mobile communication network. Furthermore, it is advantageously furthermore possible and preferred that, as opposed to current multi-SIM functionality, when more than one set of credentials is used, a network can steer the multiple connectivity of user equipments, as opposed to having independent network connections.

It is thereby advantageously possible to realize and implement the inventive method in a comparatively simple and efficient manner.

It is possible that the user equipment transmits the capability indication information, especially as part of a registration request message, according to one or a plurality of the following possibilities:
-- to the radio access network to which the user equipment is connected,
-- to the core network corresponding to the radio access network to which the user equipment is connected,
-- to the first and/or second mobile communication network, and/or
wherein the user equipment receives the multiple registration information, especially as part of a registration accept message and/or as part of a UE configuration update, UCU, message and/or as part of a parameter update, UPU, message and/or as part of an access network discovery and selection policy, ANDSP, message and/or as a steering of roaming, SoR, message, according to one or a plurality of the following possibilities:
-- from the core network corresponding to the radio access network to which the user equipment is connected,
-- from the first and/or second mobile communication network.

It is thereby advantageously possible to realize and implement the inventive method in a comparatively simple and efficient manner.

According to the present invention, it is furthermore advantageously possible and preferred that the user equipment transmits the capability indication information as part of at least one out of the following:
-- a registration request message,
-- an access stratum communication between the user equipment and the radio access network - especially as part of the UE radio capability handling,
-- an non-access stratum communication between the user equipment and the core network - especially part of the UE mobility management core network capability handling.

It is thereby advantageously possible to realize and implement the inventive method in a comparatively simple and efficient manner.

Furthermore, according to the present invention the capability indication information comprises information regarding the first mobile communication network when connecting to the second network, especially regarding the radio access network of the first network and/or information informing the second network that it is already connected to the first network.

It is thereby advantageously possible to realize and implement the inventive method in a comparatively simple and efficient manner.

Furthermore, it is advantageously possible and preferred according to the present invention that the capability indication information comprises - besides the piece of information of whether the user equipment supports, or is enabled, to establish both the first connection and the second connection - at least one out of the following:
-- a piece of information regarding whether the user equipment, the subscriber identity module and/or the universal integrated circuit card of the user equipment supports, or is enabled, that both the first connection and the second connection is established,
-- a piece of information regarding how many multiple network registrations the user equipment is able to support, especially how many non-access stratum stacks and/or radio chains are able to be operated and/or instantiated,
-- a piece of information regarding which combination of radio access technologies and/or frequency bands are supported,
-- a piece of information regarding which combination of core technologies, especially fifth generation core, 5GC, or enhanced packet core, EPC, are supported,
-- a piece of information whether the user equipment is already connected to a given network, and, if yes, information related to this network,
wherein especially, the capability indication information refers to a pre-defined table of types of capabilities, each of such types of capabilities being defined as comprising capability aspects regarding different capability dimensions.

It is thereby advantageously possible to realize and implement the inventive method in a comparatively simple and efficient manner.

Furthermore, it is advantageously possible and preferred according to the present invention that the multiple registration information comprises - besides the piece of information of whether the user equipment is allowed to establish both the first connection and the second connection - at least one out of the following:
-- a piece of information regarding how many multiple network registrations the user equipment is allowed to simultaneously maintain or regarding how many mobile communication networks the user equipment is allowed to simultaneously register to,
-- a piece of information regarding which access combinations - especially regarding radio access technologies and/or frequency bands and/or regarding accessing a terrestrial or a non-terrestrial network - the user equipment is allowed to realize,
-- a piece of information regarding networks and/or network combinations with which the user equipment is allowed to simultaneously register to,
-- a piece of information regarding whether location and/or time conditions are required to be observed, by the user equipment, regarding multiple registrations and/or a piece of information regarding which location and/or time conditions are required to be observed, by the user equipment, regarding multiple registrations.

It is thereby advantageously possible to realize and implement the inventive method in a comparatively simple and efficient manner.

Furthermore, it is advantageously possible and preferred according to the present invention that, in a fourth step subsequent to the second step, the user equipment receives a further multiple registration information, wherein the user equipment replaces the multiple registration information received in the second step with the further multiple registration information.

It is thereby advantageously possible to realize and implement the inventive method in a comparatively simple and efficient manner.

Furthermore, it is advantageously possible and preferred according to the present invention that - as part of a mobile communication network, especially a core network thereof, comprising network functions or services - network function capability indication information is
-- transmitted by a first network function or service of the mobile communication network, or
-- exchanged between a first network function or service and a second network function or service of the mobile communication network,
wherein the network function capability indication information is especially part of a profile information of the respective network function or service.

It is thereby advantageously possible to realize and implement the inventive method in a comparatively simple and efficient manner.

Furthermore, it is advantageously possible and preferred according to the present invention that - in case of a roaming situation of the user equipment, which includes as well a roaming-like situation in which a roaming architecture is used (e.g. the use of the roaming architecture to interconnect between a PLMN and an SNPN), where user equipment is connected to a visited mobile communication network - the capability indication information, transmitted by the user equipment, is received, besides by the home mobile communication network of the user equipment, also by the visited mobile communication network of the user equipment, and, if applicable, also by one or a plurality of intermediate mobile communication networks that are connecting the visited mobile communication network and the home mobile communication network of the user equipment.

It is thereby advantageously possible to realize and implement the inventive method in a comparatively simple and efficient manner.

Furthermore, the present invention relates to a user equipment for being operated with a radio access network of a mobile communication network according to the features of claim 11.

Furthermore, the present invention relates to a system or mobile communication network for operating a user equipment with a radio access network of a mobile communication network according to the features of claim 12.

Additionally, the present invention relates to a program comprising a computer readable program code which, when executed on a computer and/or on a user equipment and/or on a network node of a mobile communication network, or in part on a user equipment and/or in part on network node of a mobile communication network, causes the computer and/or the user equipment and/or the network node of the mobile communication network to perform the inventive method.

Still additionally, the present invention relates to a computer-readable medium comprising instructions which when executed on a computer and/or on a user equipment and/or on a network node of a mobile communication network, or in part on a user equipment and/or in part on network node of a mobile communication network, causes the computer and/or the user equipment and/or the network node of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

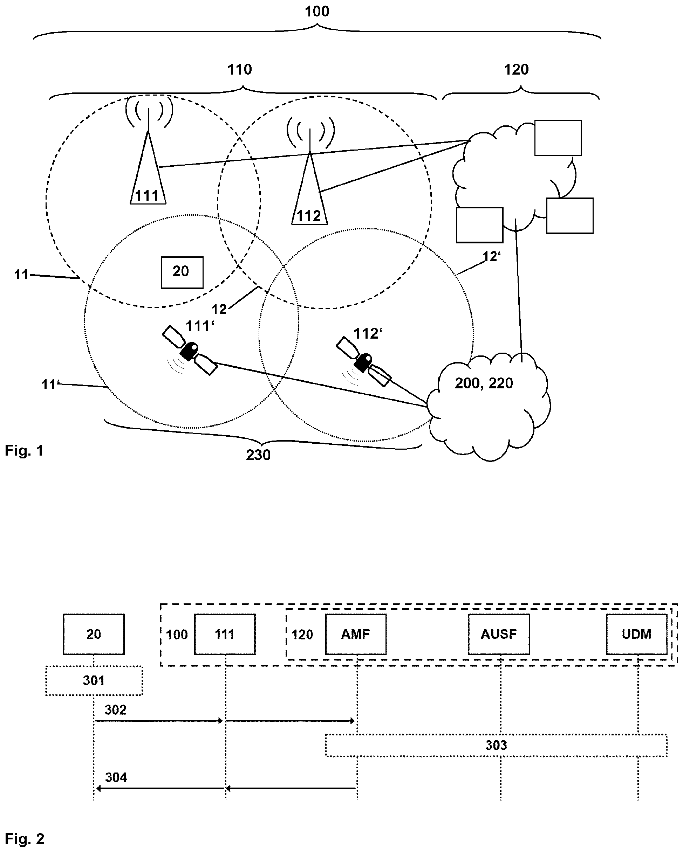

Figure 1 schematically illustrates a user equipment in a radio environment such as to be able to be potentially connected to different mobile communication networks, e.g. a terrestrial mobile communication network and a non-terrestrial mobile communication network.
Figure 2 schematically illustrates a communication diagram of the user equipment transmitting a capability indication information relating to its capabilities to simultaneously connect to different mobile communication networks, and the user equipment receiving a multiple registration information relating to whether the user equipment is allowed to establish certain connections.
Figures 3 and 4 schematically likewise illustrate examples of communication diagrams of the user equipment transmitting the capability indication information, and the user equipment receiving the multiple registration information as well as how the resulting dual or multiple connection of the user equipment is able to be applied.
Figure 5 schematically illustrates a communication diagram of the user equipment transmitting the capability indication information, and the user equipment receiving the multiple registration information relating to a roaming or roaming-like situation of the user equipment, involving a visited network and the home network of the user equipment.

### DETAILED DESCRIPTION

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a user equipment 20 is schematically shown in a radio environment such as to be able to be potentially connected to different mobile communication networks - exemplarily shown, in Figure 1, as a terrestrial mobile communication network 100 and a non-terrestrial mobile communication network 200 - called, in the context of the present invention, a first mobile communication network 100 and a second mobile communication network 200. The first mobile communication network 100 comprises an access network 100 or a radio access network 100, and a core network 120. The telecommunications network 100 or also mobile communication network 100 is typically realized as a cellular network or cellular mobile communication network 100. The mobile communication network 100, especially the core network 120, typically comprises a number of network functions or services that are not specifically indicated by means of a reference sign. The (radio) access network 110 comprises a plurality of radio cells 11, 12, i.e. geographical areas served, respectively, by base station entities. In the exemplary situation or scenario shown in Figure 1, a first base station entity 111 generates or is associated with or spans the first (terrestrial) radio cell 11, and a second base station entity 112 generates or is associated with or spans the second (terrestrial) radio cell 12 (the first and second (terrestrial) radio cells 11, 12 being represented, in Figure 1, by means of dashed circles around the first and second base station entities 111, 112, respectively). The base station entities 111, 112 typically realize gNB functionality or next-generation gNB functionality. The mobile communication network 100 is typically connected to a plurality of user equipments (or, rather, the user equipments are connected to the telecommunications network 100). Figure 1 schematically only shows one user equipment 20, i.e. the situation of that user equipment 20 is represented in the communication network 100, whose (above mentioned) radio access network 110 is realized as a terrestrial radio access network 110, i.e. the radio access network 110 realizes the terrestrial radio access network (part) of the mobile communication network 100 (that is able to provide the user equipment 20 with radio access network functionality).

Figure 1 additionally shows a second mobile communication network 200 in the form of a non-terrestrial network, i.e. comprising a non-terrestrial radio access network 230 which is preferably realized, according to the present invention, by means of (or as) a satellite radio access network or satellite non-terrestrial radio access network. The second mobile communication network 200 furthermore comprises a (second) core network 220. The second mobile communication network 200 (exemplarily shown as a non-terrestrial mobile communication network) likewise comprises base station entities that are schematically and exemplarily represented, in Figure 1, as a first satellite 111' and a second satellite 112', wherein the first satellite 111' provides radio coverage in a first satellite (or non-terrestrial) radio cell 11' and the second satellite 112' provides radio coverage in a second satellite (or non-terrestrial) radio cell 12' (the first and second satellite (non-terrestrial) radio cells 11', 12' being represented, in Figure 1, by means of dotted circles around the first and second satellites 111', 112', respectively).

In any case, the user equipment 20 is able to be provided with radio access network functionality and network connectivity by both the first mobile communication network 100 and by means of the second mobile communication network 200.

Hence, the user equipment 20 is schematically shown in a radio environment comprising a plurality of radio cells of a plurality of mobile communication networks 100, 200. Of course, in addition to the first and second mobile communication networks 100, 200, an additional third mobile communication network, or still further mobile communication networks, might be available to the user equipment 20.

In such a situation of a user equipment 20, in conventionally known mobile communication networks, there already exists the possibility that such a user equipment 20 is connecting to such different mobile communication networks 100, 200 simultaneously via or using a 3GPP access - also called dual steering or multiple steering; such mobile communication networks 100, 200 typically have (or use) different pieces of network identifier, such as a public land mobile network identifier information (PLMN IDs) or combination of PLMN ID and network identifier (NID). Furthermore, the user equipment 20 should preferably be enabled to simultaneously connect to such different mobile communication networks 100, 200 using a single set of credentials.

However, despite such dual (or multiple) steering functionality being possible, in principle, a considerable number of possible hindrances or technical problems and/or situations or scenarios exist where such dual steering (or multiple steering) and/or network connectivity is either not able to be used at all, or, at least, not able to be used efficiently.

Such situations include cases where some user equipments support connectivity to multiple networks (or dual steering) - and some user equipments do not; e.g., due to different modem support and/or capability to maintain more than one registration simultaneously. Furthermore, within a user equipment that supports dual steering, there might be support for some dual steering scenarios but not for others; e.g. support for dual steering in a satellite/terrestrial scenario could exist but not for a satellite/satellite scenario (for example due to hardware limitations); or, support for a dual steering PLMN/PLMN scenario could exist but not for a PLMN/SNPN (standalone non-public network) scenario (for example due to a lack of standalone non-public network support). Furthermore, support for dual steering / multiple steering might differ as to the number of simultaneous registrations: e.g. one user equipment supports two mobile communication networks, and another user equipment supports three mobile communication networks. Furthermore, the subscriber identity module (SIM card) or universal integrated circuit card may support only certain combinations of networks or scenarios of dual steering but not others, e.g. due to not being able to support multiple state machines for a single set of keys. Furthermore, even in case a user equipment, in principle, supports dual steering, there might be obstacles to its applications, relating to the subscriber not being allowed to realize certain combinations, or relating to the home network not supporting dual steering functionality, or, in case of roaming, relating to the visited or the home network not supporting dual steering functionality (e.g., for either home or visited network because of regulatory requirements).

Hence, even though, in principle, a dual steering functionality is able to be realized in conventionally known mobile communication networks, there is nevertheless a considerable number of technical problems and/or situations or scenarios possible where such dual steering (or multiple steering) and/or corresponding network connectivity is not able to be effectively deployed, especially due to limitations (to the application of dual or multiple steering) that are somewhat hidden to entities that would be involved in such functionality.

According to the present invention, it is suggested to provide useful information - to the entities communicating with each other (or cooperating) in order to realize such dual/multiple steering functionality - or, rather, to exchange such information between such entities. Especially, the present invention aims at providing the mobile communication network 100, 200 (to which the considered user equipment 20 is connected or registered) information regarding the capability of the considered user equipment 20 to connect to multiple networks. Additionally, the mobile communication network 100, 200 shall be provided with useful information from other sources regarding its own capability to support dual or multiple connectivity. Additionally, an answer, or response, of the mobile communication network 100, 200 and towards the considered user equipment 20 is proposed to be defined, as well as the behavior of the user equipment 20.

Hence, according to the present invention, it is supposed that the user equipment 20 is enabled to be simultaneously connected to different mobile communication networks 100, 200 (such mobile communication networks 100, 200 having, or using, different pieces of network identifier information, PLMN IDs). In order to use the user equipment 20 with either one, or both, of the first and/or second mobile communication networks 100, 200, the user equipment 20 transmits a capability indication information and receives a multiple registration information, especially in this order; however, according to further variants or embodiments of the present invention, this order might also be reversed (i.e. that the user equipment 20 receives the multiple registration information first and transmits the capability indication information later).

The capability indication information comprises at least the piece of information of whether the user equipment 20 supports, or is enabled, for dual/multiple steering (i.e. able to establish both the first connection and the second connection), whereas the multiple registration information comprises at least the piece of information of whether the user equipment 20 is allowed to use dual/multiple steering (i.e. establish both the first connection and the second connection).

Typically, and as a result of the user equipment 20 transmitting the capability indication information and receiving the multiple registration information, in a subsequent third step, the dual or multiple steering is actually realized or implemented by means of the user equipment 20 being simultaneously connected to both the first and the second mobile communication networks 100, 200 using the first and second connection, and especially using a set of credentials (especially one single set of credentials).

This is schematically shown in Figure 2 which illustrates a communication diagram of the user equipment 20 transmitting the capability indication information relating to its capabilities (to conduct dual/multiple steering, or simultaneously connect to different mobile communication networks 100, 200), and the user equipment receiving (from either the respective core network - in the exemplary representation of Figure 2, the first mobile communication network 100 and its core network 120 is exemplarily illustrated - or from the respective radio access network - again, in the exemplary representation of Figure 2, the first mobile communication network 100 and its radio access network 110, or, rather, a base station entity 111 as part of its radio access network 110 is exemplarily illustrated) the multiple registration information (relating to whether the user equipment 20 is allowed to establish certain connections).

In a first processing step 301, the considered user equipment 20 is aware of its ('own', i.e. hardware-related or device-related or subscriber identity module card-related) capabilities (and, especially, its limitations regarding such capabilities) concerning dual/multiple steering functionality. Hence, the (dual/multiple steering) capability is known to the user equipment 20, e.g. the user equipment's 20 capability could be limited by the hardware capabilities of the user equipment 20 (and said information is part of the user equipment's 20 characteristics, e.g. set by the user equipment 20 vendor) or by the SIM card's capabilities (which the user equipment 20, e.g., (previously) queried and which is, thus, known to it) or the user equipment's 20 capability is stored in a configuration parameter in the user equipment 20 and/or the SIM card, typically configured by the (home network) operator (again which the user equipment 20, e.g., (previously) queried and which is, thus. known to it).

In a second processing step 302, the user equipment 20 transmits the capability indication information to an entity or network node of the radio access network 110 and/or to an entity or network node of the core network 120; in the exemplary embodiment shown in Figure 2, such capability indication information is transmitted, by the user equipment 20, as part of a registration request (message). Hence, in this exemplary embodiment, the user equipment 20 performs a registration request and includes the capability indication (information); especially, there are two preferred placements of the capability indication (information) considered (as it is important to indicate the support on both the radio level (between UE and RAN, i.e. access stratum, AS, communication) and on the non-access stratum, NAS, level (between UE and CN)): the user equipment radio capability handling (the user equipment radio capability information especially contains information on radio access technologies that the user equipment supports, e.g. power class, frequency bands, etc.) and the user equipment mobility management core network capability handling (the user equipment mobility management core network capability is split into the S1 user equipment network capability (mostly for E-UTRAN access related core network parameters) and the user equipment 5G mobility management core network capability (mostly to include other user equipment capabilities related to 5G core network or interworking with EPS) and contains non radio-related capabilities, e.g. the non-access stratum security algorithms, etc.).

In a third processing step 303, the user equipment 20 is registered, i.e. the user equipment registration procedure is performed, mainly by the respective or concerned network functions or services of the core network, especially the access and mobility management function, AMF, the authentication server function, AUSF, and/or the unified data management function, UDM. Hence, the core network 120 performs the user equipment registration as required and additionally evaluates the support of simultaneous registration to multiple networks for the specific UE.

In a fourth processing step 304, the user equipment 20 receives the multiple registration information from an entity or network node of the radio access network 110 and/or from an entity or network node of the core network 120; in the exemplary embodiment shown in Figure 2, such multiple registration information is transmitted, by the mobile communication network 100, as part of a registration accept (message). Thus, the core network 120 responds in the registration accept (message) including the dual/multiple registration information, which includes whether and/or in what combinations multiple simultaneous registrations are allowed.

Hence, especially, the capability indication (information) is transmitted as part of registration procedure, and the capability indication information comprises the indication whether, and if yes, in what form, the user equipment 20 supports simultaneous registrations to multiple networks - such simultaneous registrations to multiple network typically being conducted with (or using) a single set of credentials as using multiple subscriber identity modules for registration to independently register to multiple networks would substantially correspond to existing multi-SIM functionality.

After receiving the multiple registration information, the user equipment 20 is able to simultaneously connected to the first and second mobile communication network 100, 200 using the first and second connection, thereby realizing, or executing, the third step of the inventive method according to the present invention.

In Figure 2, what is exemplarily represented is a communication (as part of a registration procedure) between the user equipment 20 and the first mobile communication network 100 (i.e. its radio access network 110 and/or its core network 120) in order for the user equipment 20 to transmit the capability indication information and to receive the multiple registration information; however, as has already been stated and as the use of ordinal numbers regarding different mobile communication networks is merely a means to differentiate or distinguish these networks, the communication of the user equipment 20 could also have been with the 'second' mobile communication network 200 instead of the first. In either case, the content of the capability indication information and/or of the multiple registration information might be shared between the respective networks; alternatively or cumulatively, upon the user equipment 20 having transmitted the capability indication information and received the multiple registration information from one of the networks, a corresponding communication - i.e. the transmission of a (further) capability indication information and the reception of a (further) multiple registration information; e.g. also as part of a registration procedure, e.g. as part of the third step according to (the method of) the present invention - might also be performed with the other one of the mobile communication networks involved. It is further revealed, as not part of the invention, that the user equipment 20 transmits the capability indication information, especially as part of a registration request message, according to one or a plurality of the following possibilities:
-- to the radio access network to which the user equipment 20 is connected,
-- to the core network corresponding to the radio access network to which the user equipment 20 is connected,
-- to the first and/or second mobile communication network 100, 200,
and/or the user equipment 20 receives the multiple registration information, especially as part of a registration accept message and/or as part of a UE configuration update, UCU, message and/or as part of a parameter update, UPU, message and/or as part of an access network discovery and selection policy, ANDSP, message and/or as a steering of roaming, SoR, message, according to one or a plurality of the following possibilities:
-- from the core network corresponding to the radio access network to which the user equipment 20 is connected,
-- from the first and/or second mobile communication network 100, 200.

According to the present invention, the (further) capability indication information - transmitted to the second mobile communication network 200 - comprises information regarding the first mobile communication network when connecting to the second mobile communication network 200, especially regarding the radio access network of the first mobile communication network 100 and/or information informing the second mobile communication network 200 that the user equipment 20 is already connected to the first mobile communication network 100.

Preferably according to the present invention, either prior to the third step or subsequent to the third step (of the inventive method) - and especially repeatedly - the conditions for using the first and second connection are evaluated (either by the user equipment 20, or by the first and/or second mobile communication network 100, 200, or by both the user equipment 20 and the first and/or second mobile communication network 100, 200); i.e. in case of a change (e.g. of the location of the user equipment 20) that influences whether the conditions to respect are met, the dual or multiple steering functionality might be altered (e.g. another mobile communication network involved), or stopped (i.e. the user equipment 20 would have only one connection, either the first connection or the second connection).

Furthermore, it is advantageously possible and preferred according to the present invention that, in a fourth step subsequent to the second step, the user equipment 20 receives a further multiple registration information, wherein the user equipment 20 replaces the multiple registration information received in the second step with (or by) the further multiple registration information; thus, the further multiple registration information might be regarded as an updated version of the multiple registration information previously received by the user equipment 20.

According to the present invention, the information content of the capability indication information, or considered in dual/multiple registration capability indication, especially corresponds to at least one out of the following:
-- whether dual/multiple network registration is supported, either: without further specifics (e.g. yes/no), or regarding the user equipment 20, or regarding the SIM card,
-- how many multiple network registrations are supported (e.g., 2, 3, ...): a user equipment may be limited as to how many non-access stratum stacks and/or radio chains it can simultaneously operate/instantiate (as each non-access stratum connection requires independent state machines involving aspects such as authentication, encryption, idle/inactive/connected state, paging, etc., multiple connections require instantiation of multiple protocol stack instances, which poses implementation challenges, especially when involving embedded platforms such as a SIM card),
-- what combination of access technologies and frequency bands are supported (e.g. 4G, 5G, SNPN, LEO satellite, MEO satellite, ...): a user equipment may be limited in terms of hardware which combinations of access technologies or frequency bands it can operate in parallel (e.g. RF filters, power, frequency support),
-- what combination of core technologies are supported (e.g. 5GC, EPC): a user equipment might not be capable of simultaneous operation of a 5G-NAS and 4G-NAS stack,
-- whether the user equipment 20 is already connected to a given network, and, if yes, information related to this network (especially in order that the condition what network combinations the user equipment 20 is allowed to realize cannot be circumvented. It could also be that if a given PLMN ID is already connected to, the new network could select network functions or services that have direct connectivity to that PLMN ID (e.g. they are located in the same (cloud) region)).

Especially, according to the present invention is advantageously possible that instead of having to explicitly include each parameter, the user equipment 20 may use of a pre-defined table of capabilities, such that signaling can be optimized and the scope simplified, e.g. "capability-type-1" being equivalent to a specific combination of parameters.

Hence, the capability indication information comprises - besides the piece of information of whether the user equipment 20 supports, or is enabled, to establish both the first connection and the second connection - at least one out of the following:
-- a piece of information regarding whether the user equipment 20, the subscriber identity module and/or the universal integrated circuit card of the user equipment 20 supports, or is enabled, that both the first connection and the second connection is established,
-- a piece of information regarding how many multiple network registrations the user equipment 20 is able to support, especially how many non-access stratum stacks and/or radio chains are able to be operated and/or instantiated,
-- a piece of information regarding which combination of radio access technologies and/or frequency bands are supported,
-- a piece of information regarding which combination of core technologies, especially fifth generation core, 5GC, or enhanced packet core, EPC, are supported,
wherein especially, the capability indication information refers to a pre-defined table of types of capabilities, each of such types of capabilities being defined as comprising capability aspects regarding different capability dimensions.

According to the present invention, the information content of the multiple registration information, or considered in the dual/multiple registration information, especially corresponds to at least one out of the following:
-- whether registration to multiple networks is allowed;
-- how many networks the user equipment is allowed to simultaneously register to;
-- what access combinations the user equipment is allowed to realize
-- what network combinations the user equipment 20 is allowed to realize (in a manner similar to the carrier aggregation (CA) functionality only allows certain, specific frequency combinations (i.e., it is not possible to aggregate any combination of frequencies), it is preferred according to the present invention that which combinations of networks are able to be used by the user equipment 20 is able to be controlled (especially by the home operator), i.e. that a combination of a specific "PLMN A and PLMN B" is restricted, even if - from a technical perspective - the combination would be possible/realizable).

In order to fulfill regulatory requirements, the network may need to constrain connectivity to multiple networks to certain locations (e.g. countries) and/or times. To realize such requirements, it is proposed, according to the present invention,
-- that location and/or time conditions are included to the dual/multiple registration information, such that the information, or specific registration combinations are only allowed if the condition(s) is/are met, and/or
-- that the user equipment's configuration is updated if it is detected that the conditions are not met (e.g. the user equipment moved from country A to country B).

Hence, the multiple registration information comprises - besides the piece of information of whether the user equipment 20 is allowed to establish both the first connection and the second connection - at least one out of the following:
-- a piece of information regarding how many multiple network registrations the user equipment 20 is allowed to simultaneously maintain or regarding how many mobile communication networks 100, 200 the user equipment 20 is allowed to simultaneously register to,
-- a piece of information regarding which access combinations - especially regarding radio access technologies and/or frequency bands and/or regarding accessing a terrestrial or a non-terrestrial network - the user equipment 20 is allowed to realize,
-- a piece of information regarding networks and/or network combinations with which the user equipment 20 is allowed to simultaneously register to,
-- a piece of information regarding whether location and/or time conditions are required to be observed, by the user equipment 20, regarding multiple registrations and/or a piece of information regarding which location and/or time conditions are required to be observed, by the user equipment 20, regarding multiple registrations.

As has been mentioned, either prior to the third step or subsequent to the third step (of the inventive method) - and especially repeatedly - the conditions for using the first and second connection are evaluated. Possible and preferred implementations regarding such updating or evaluation of conditions are schematically shown in Figures 3 and 4, which illustrate examples of communication diagrams of the user equipment 20 transmitting the capability indication information to the mobile communication network 100, and the user equipment 20 receiving the multiple registration information as well as how the resulting dual or multiple connection of the user equipment 20 is able to be applied:
Both Figures 3 and 4 schematically show the second processing step 302 (i.e. the user equipment 20 transmitting the capability indication information to an entity or network node of the radio access network 110 and/or to an entity or network node of the core network 120 of the mobile communication network 100, especially as part of a registration request message) and the fourth processing steps 304 (i.e. the user equipment 20 receiving the multiple registration information from an entity or network node of the radio access network 110 and/or from an entity or network node of the core network 120 of the mobile communication network 100, especially as part of a registration accept message) as represented in Figure 2. In the exemplary embodiment represented in Figure 3, in a fifth processing step 305 (subsequent to the fourth processing step 304), it is the user equipment 20 that evaluates the conditions (regarding dual/multiple steering) as received by means of the multiple registration information from the mobile communication network 100 (UE-based conditional evaluation of dual/multiple registration information), and, subsequently and in a sixth processing step 306, applies these conditions regarding the dual or multiple steering functionality, i.e. it is simultaneously connected to the first and second mobile communication networks 100, 200, and thereby realizes, or executes, the third step of the inventive method according to the present invention.

In contrast thereto, in the exemplary embodiment represented in Figure 4, in a seventh processing step 307 (subsequent to the fourth processing step 304), it is the mobile communication network 100 that evaluates the conditions (regarding dual/multiple steering) in accordance to both the capability indication information and the multiple registration information (network-based conditional update of dual/multiple registration information), and, subsequently and in an eighth processing step 308, transmits - if applicable and necessary due to a change, e.g. of the location of the user equipment 20 - a configuration update information or configuration update message to the user equipment 20, the configuration update information or configuration update message comprising the multiple registration information; thereafter, in a ninth processing step 309, the user equipment 20 again applies the dual or multiple steering functionality, i.e. it is simultaneously connected to the first and second mobile communication networks 100, 200, according to the conditions or the configuration update information or message received, and thereby realizes, or executes, the third step of the inventive method according to the present invention.

According to the present invention, the embodiments or variants referred to in Figures 3 and 4 are also able to be mixed or realized in parallel (or combined), i.e. the evaluation of the conditions to be observed regarding dual/multiple steering might also be conducted by both the user equipment 20 (e.g. regarding a part of such conditions) and the mobile communication network 100 (e.g. regarding another part of such conditions).

Furthermore according to the present invention, alternative ways to send the dual/multiple registration information are possible and preferred; hence, especially the following forms in which the dual/multiple registration information is conveyed to the user equipment 20 - either as part of a registration procedure or because of a network-triggered update of said information - are proposed:
-- the multiple registration information is able to be included in the registration accept message (sent at the end of the registration procedure) or as part of the registration procedure;
-- the multiple registration information is able to be a part of a user equipment configuration update, UCU, message (user equipment configuration may be updated by the network at any time using user equipment configuration update procedure, which especially includes:
   access and mobility management related parameters decided and provided by the access and mobility management function, AMF), i.e. the multiple registration information is transmitted from the AMF to the user equipment 20, given that UCU does typically include MM (mobility management)-related information;
-- the multiple registration information is able to be a part of a user equipment parameter update, UPU, message (the purpose of the control plane solution for update of user equipment parameters is to allow the home public land mobile network, HPLMN, standalone non-public network, SNPN, or credential holder, CH, (of a standalone non-public network) to update the user equipment 20 with a specific set of parameters, generated and stored in the unified data management, UDM, by delivering protected UDM update data via non-access stratum signaling; the HPLMN, SNPN, or CH update such parameters based on the operator policies; the UDM update data that the UDM delivers to the user equipment 20 may, e.g., contain one or more user equipment parameters including: (a) the updated default configured NSSAI (final consumer of the parameter is the ME); (b) the updated routing indicator data (final consumer of the parameter is the USIM when the related credential is stored in the USIM, i.e. for PLMN or SNPN credentials; or final consumer of the parameter is the ME when the related credential is stored in the ME, i.e. for SNPN credentials); (c) indication of whether disaster roaming is enabled in the UE if UE MINT support indicator is received or UE is registered for Disaster Roaming service currently; (d) indication of 'applicability of "lists of PLMN(s) to be used in disaster condition" provided by a VPLMN if UE MINT support indicator is received or UE is registered for Disaster Roaming service currently; (e) a "UE acknowledgement requested" indication, (f) a "re-registration requested" indication), i.e. the multiple registration information is transmitted from the UDM to the user equipment 20 via AMF as transparent forwarder, given that a change in subscriber-related information would allow the UDM to directly trigger an update, for which a UPU procedure would result;
-- the multiple registration information is able to be part of an access network discovery and selection policy, ANDSP, message, i.e. the multiple registration information is transmitted from the PCF to the user equipment 20 via AMF as transparent forwarder, as Access Network Discovery & Selection Policy Information is meant to help the user equipment select an WLAN access network, and, thus, may be extended - according to an embodiment of the present invention - to other access networks at some point (the Access Network Discovery & Selection policy is an optional policy that may be provided to user equipment by the network; in the present release of the specification, the Access Network Discovery & Selection policy shall contain only rules that aid the UE in selecting a WLAN access network, and, presently, rules for selecting other types of non-3GPP access networks are not specified);
-- the multiple registration information is able to be part of a Steering of Roaming (SoR) message, i.e. the multiple registration information is transmitted from the AMF to the user equipment 20 (the SoR information for a given subscriber encompasses a list of preferred PLMN/access technology combinations and/or Credentials Holder controlled prioritized lists of preferred SNPNs and GINs or HPLMN/Credentials Holder indication that no change of the above list(s) stored in the UE is needed; optionally includes an indication that the UDM requests an acknowledgement of the reception of this information from the UE), because although what specific networks the user equipment should connect to is not in the scope but the access technology combinations that are allowed are. The dual/multiple registration information could be advantageously included in this message because ultimately, the user equipment will need to combine both sets of information to perform network selection of any additional (second, third, etc.) network after an initial network selection to a first network.

Regarding the realization or deployment of dual/multiple steering functionality, there might be constraints for supporting dual/multiple connectivity by the network/network components:
In order to produce the dual/multiple registration information, the mobile communication network 100 should consider not only the (capability indication) information provided by the user equipment 20, but also its own capabilities. While a user equipment 20 may be capable of supporting simultaneous registration in multiple networks, from the network side, the following limitations may exist:
-- The UDM might not be capable of supporting this capability (one of the functions of the UDM is to perform UE's serving network function registration management (e.g. storing serving AMF for the user equipment, storing serving SMF for UE's PDU Session); there is currently only one AMF, and current UDMs can, presently, typically not sup port multiple AMFs);
-- similar cases might exist in the case of further network functions or services, such as: AUSF (authentication), CHF (charging), or PCF (policy).

As such, in order for the mobile communication network 100 (e.g. the AMF) to evaluate whether all necessary NFs are capable, considers that network functions include, in their NF profile (the network repository function, NRF, supports the functionality to support service discovery of NRF services and their endpoint addresses by the NRF bootstrapping service; the network function profile of a NF instance maintained in an NRF includes the information related to the network function that registered this profile), a dual/multiple registration capability indication, equivalent to the dual/multiple registration capability indication (information) of the user equipment 20.

According to the present invention, it is preferred that at least the UDM, AUSF in the (H-)PLMN (in general terms, the "home network"; for standalone non-public networks, the term "credential holder (CH)" is used) would need to support dual/multiple registration capability, whereas functionality fulfilling the CH functionality (e.g., UDM or Authentication, Authorization and Accounting, AAA, system), PCF would also need it for most cases.

Hence, in this manner, the mobile communication network 100 is able to evaluate whether the capability (of deploying the dual/multiple steering functionality) can be offered to the (requesting) user equipment 20, and - if support is heterogeneous (e.g. several CHF instances are present, and some of them are supporting the feature, and some others not) - only instances supporting the feature are selected to serve the given (or requesting) user equipment 20.

Similarly, this information can be included in the subscriber data, such given network support, dual/multiple registration information can be steered with a per-subscriber granularity.

Hence preferably according to the present invention, within (or as part of) a mobile communication network, especially a core network thereof comprising network functions or services, a network function capability indication information is
-- transmitted by a first network function or service of the mobile communication network, or
-- exchanged between a first network function or service and a second network function or service of the mobile communication network,
wherein the network function capability indication information is especially part of a profile information of the respective network function or service.

Additionally, it is preferred to take other conditions into consideration, such as:
-- Available connectivity,
-- Existing roaming agreements,
-- Regulatory framework applicability, which may be conditional on the location of the user equipment and/or on the time.

The case of a roaming scenario is schematically shown in Figure 5, which schematically illustrates a communication diagram of the user equipment 20 transmitting the capability indication information, and the user equipment 20 receiving the multiple registration information relating to a roaming situation of the user equipment 20, involving a visited network 500 the user equipment 20 is connected to, and the home network 100 of the user equipment 20: In such a roaming case, i.e. generally when a subscriber of a mobile communication network (i.e. the home network), e.g. the first mobile communication network 100, is being served by a visited mobile communication network, e.g. mobile communication network 500, the home network 100 is still responsible regarding authentication and authorization (the visited network 500 does not have the subscriber information or the cryptographic keys linked to this subscriber). Additionally, it might be the case, that such two networks are not directly connected but are connected via one or more intermediaries (e.g. IPX and/or roaming hub), hereinafter called intermediary network 400.

To support roaming, the present invention and especially the inventive method proposes that the dual/multiple registration capability (information) - transmitted by the user equipment 20 - is propagated such that it is known to the visited mobile communication network 500, the home mobile communication network 100 and/or the intermediary network 400, such that the following cases are avoided:
-- a disparity of capability between the visited mobile communication network 500 and the home mobile communication network 100 might cause the user equipment 20 to wrongly receive the information that the feature is supported; it is however in practice not functioning because neither the visited network 500 not the home network 100 was aware of the capabilities of its counterpart. While currently the visited mobile communication network 500 would not play a role in terms of dual/multiple registration capability, more complex scenarios would be possible, such as dual connectivity for a service being offered with Local BreakOut (LBO) architecture and an additional network registration connecting to that LBO-based service in the visited network from another visited network, whereas the first visited network would need to support double connectivity to properly be able to steer policies in the second visited network.
-- the intermediary network 400 flags dual connectivity as a fraudulent activity (e.g. SIM cloning) because it is not aware that a given user equipment 20 and/or network should be allowed to be registered multiple times.

Figure 5 shows all of the information flow directions:
-- as part of a first processing step 311, the transmission, by the user equipment 20, of its capability, by means of transmitting the capability indication information to the visited network 500, and further to the intermediary network 400, and/or further to the home network 100;
-- as part of a second processing step 312, the transmission, of the visited network's capability to the intermediary network 400 and/or further to the home network 100;
-- as part of a third processing step 313, the transmission, of the home network's capability to the intermediary network 400 and/or further to the visited network 500;
-- as part of a fourth processing step 314, the transmission, of the intermediary network's capability to the home network 100 and/or to the visited network 500.

Hence according to the present invention - in case of a roaming or roaming-like situation of the user equipment 20, where the user equipment 20 is connected to a visited mobile communication network - the capability indication information, transmitted by the user equipment 20, is received, besides by the home mobile communication network of the user equipment 20, also by the visited mobile communication network of the user equipment 20, and, if applicable, also by one or a plurality of intermediate mobile communication networks that are connecting the visited mobile communication network and the home mobile communication network of the user equipment 20.

## Claims

1. Method for operating a user equipment (20) with a radio access network of a mobile communication network, wherein the user equipment (20) is enabled to be simultaneously connected to different mobile communication networks that have, or use, different pieces of network identifier information,
wherein such different mobile communication networks comprise a first mobile communication network (100) and, at least, a second mobile communication network (200), wherein the user equipment (20) is enabled to be registered, using a first connection, to the first mobile communication network (100), and wherein the user equipment (20) is furthermore enabled to be also registered, using a second connection, to at least the second mobile communication network (200), wherein, in order to use the user equipment (20) with either one, or both, of the first and/or second mobile communication networks (100, 200), the method comprises the following steps:
-- in a first step, the user equipment (20) transmits a capability indication information, the capability indication information comprising at least a piece of information of whether the user equipment (20) supports, or is enabled, to establish both the first connection and the second connection, wherein the capability indication information comprises information regarding the first mobile communication network when connecting to the second network,
-- in a second step, the user equipment (20) receives a multiple registration information, the multiple registration information comprising at least a piece of information of whether the user equipment (20) is allowed to establish both the first connection and the second connection.

2. Method according to claim 1, wherein, in a third step subsequent to the second step, the user equipment (20) is simultaneously connected to the first and second mobile communication network (100, 200) using the first and second connection and using a set of credentials,
wherein prior to the third step or subsequent to the third step conditions for using the first and second connection are evaluated,
wherein this evaluation is performed by the user equipment (20), or by the first and/or second mobile communication network (100, 200).

3. Method according to one of the preceding claims, wherein the set of credentials used by the user equipment (20) refers to a single set of credentials to connect to both the first mobile communication network (100) and the second mobile communication network (200), wherein the single set of credentials refers to the first mobile communication network (100), or to the second mobile communication network (200) or even to a third mobile communication network.

4. Method according to one of the preceding claims, wherein the user equipment (20) transmits the capability indication information as part of at least one out of the following:
-- a registration request message,
-- an access stratum communication between the user equipment (20) and the radio access network,
-- a non-access stratum communication between the user equipment (20) and the core network.

5. Method according to one of the preceding claims, wherein the information regarding the first mobile communication network when connecting to the second network comprises the radio access network of the first network and/or information informing the second network that it is already connected to the first network.

6. Method according to one of the preceding claims, wherein the capability indication information comprises - besides the piece of information of whether the user equipment (20) supports, or is enabled, to establish both the first connection and the second connection - at least one out of the following:
-- a piece of information regarding whether the user equipment (20), the subscriber identity module and/or the universal integrated circuit card of the user equipment (20) supports, or is enabled, that both the first connection and the second connection is established,
-- a piece of information regarding how many multiple network registrations the user equipment (20) is able to support,
-- a piece of information regarding which combination of radio access technologies and/or frequency bands are supported,
-- a piece of information regarding which combination of core technologies are supported,
-- a piece of information whether the user equipment (20) is already connected to a given network, and, if yes, information related to this network,
wherein the capability indication information refers to a pre-defined table of types of capabilities, each of such types of capabilities being defined as comprising capability aspects regarding different capability dimensions.

7. Method according to one of the preceding claims, wherein the multiple registration information comprises - besides the piece of information of whether the user equipment (20) is allowed to establish both the first connection and the second connection - at least one out of the following:
-- a piece of information regarding how many multiple network registrations the user equipment (20) is allowed to simultaneously maintain or regarding how many mobile communication networks (100, 200) the user equipment (20) is allowed to simultaneously register to,
-- a piece of information regarding which access combinations the user equipment (20) is allowed to realize,
-- a piece of information regarding networks and/or network combinations with which the user equipment (20) is allowed to simultaneously register to,
-- a piece of information regarding whether location and/or time conditions are required to be observed, by the user equipment (20), regarding multiple registrations and/or a piece of information regarding which location and/or time conditions are required to be observed, by the user equipment (20), regarding multiple registrations.

8. Method according to one of the preceding claims, wherein, in a fourth step subsequent to the second step, the user equipment (20) receives a further multiple registration information, wherein the user equipment (20) replaces the multiple registration information received in the second step with the further multiple registration information.

9. Method according to one of the preceding claims, wherein - as part of a mobile communication network comprising network functions or services - network function capability indication information is
-- transmitted by a first network function or service of the mobile communication network, or
-- exchanged between a first network function or service and a second network function or service of the mobile communication network,

10. Method according to one of the preceding claims, wherein - in case of a roaming or roaming-like situation of the user equipment (20), where the user equipment (20) is connected to a visited mobile communication network - the capability indication information, transmitted by the user equipment (20), is received, besides by the home mobile communication network of the user equipment (20), also by the visited mobile communication network of the user equipment (20), and, if applicable, also by one or a plurality of intermediate mobile communication networks that are connecting the visited mobile communication network and the home mobile communication network of the user equipment (20).

11. User equipment (20) for being operated with a radio access network of a mobile communication network, wherein the user equipment (20) is enabled to be simultaneously connected to different mobile communication networks that have, or use, different pieces of network identifier information,
wherein such different mobile communication networks comprise a first mobile communication network (100) and, at least, a second mobile communication network (200), wherein the user equipment (20) is enabled to be registered, using a first connection, to the first mobile communication network (100), and wherein the user equipment (20) is furthermore enabled to be also registered, using a second connection, to at least the second mobile communication network (200), wherein, in order to the user equipment (20) being used with either one, or both, of the first and/or second mobile communication networks (100, 200), the user equipment (20) is configured such that:
-- the user equipment (20) transmits a capability indication information, the capability indication information comprising at least a piece of information of whether the user equipment (20) supports, or is enabled, to establish both the first connection and the second connection, wherein the capability indication information comprises information regarding the first mobile communication network when connecting to the second network,
-- the user equipment (20) receives a multiple registration information, the multiple registration information comprising at least a piece of information of whether the user equipment (20) is allowed to establish both the first connection and the second connection.

12. System or mobile communication network for operating a user equipment (20) with a radio access network of a mobile communication network, wherein the user equipment (20) is enabled to be simultaneously connected to different mobile communication networks that have, or use, different pieces of network identifier information,
wherein, in order to use the system or mobile communication network, with the user equipment (20), as a first mobile communication network (100) or as a second mobile communication network (200) of such different mobile communication networks, the user equipment (20) being enabled to be registered, to the mobile communication network, as a first or a second connection where a further connection is also enabled, the system or the mobile communication network is configured such that:
-- the system or mobile communication network receives, from the user equipment (20), a capability indication information, the capability indication information comprising at least a piece of information of whether the user equipment (20) supports, or is enabled, to establish both the first connection and the second connection, wherein the capability indication information comprises information regarding the first mobile communication network when connecting to the second network,
-- the system or mobile communication network transmits, to the user equipment (20), a multiple registration information, the multiple registration information comprising at least a piece of information of whether the user equipment (20) is allowed to establish both the first connection and the second connection.

13. Program comprising a computer readable program code, which, when executed on a computer and/or on a user equipment (20) and/or on a network node of a mobile communication network (100), or in part on a user equipment (20) and/or in part on network node of a mobile communication network (100), causes the computer and/or the user equipment (20) and/or the network node of the mobile communication network (100) to perform a method according one of claims 1 to 10.

14. Computer-readable medium comprising instructions which when executed on a computer and/or on a user equipment (20) and/or on a network node of a mobile communication network (100), or in part on a user equipment (20) and/or in part on network node of a mobile communication network (100), causes the computer and/or the user equipment (20) and/or the network node of the mobile communication network (100) to perform a method according one of claims 1 to 10.

## Patentansprüche

1. Verfahren zum Betreiben eines Benutzergeräts (20) mit einem Funkzugangsnetz eines Mobilfunknetzes, wobei das Benutzergerät (20) in die Lage versetzt wird, gleichzeitig mit verschiedenen Mobilfunknetzen verbunden zu werden, die unterschiedliche Netzkennungsinformationen haben oder verwenden,
wobei solche unterschiedlichen Mobilfunknetze ein erstes Mobilfunknetz (100) und mindestens ein zweites Mobilfunknetz (200) umfassen, wobei das Benutzergerät (20) in der Lage ist, unter Verwendung einer ersten Verbindung bei dem ersten Mobilfunknetz (100) registriert zu werden, und wobei das Benutzergerät (20) ferner in der Lage ist, unter Verwendung einer zweiten Verbindung auch bei mindestens dem zweiten Mobilfunknetz (200) registriert zu werden,
wobei, um das Benutzergerät (20) entweder mit einem oder beiden der ersten und/oder zweiten Mobilfunknetze (100, 200) zu verwenden, das Verfahren die folgenden Schritte umfasst:
-- in einem ersten Schritt überträgt das Benutzergerät (20) eine Fähigkeitsanzeigeinformation, wobei die Fähigkeitsanzeigeinformation mindestens eine Information darüber umfasst, ob das Benutzergerät (20) sowohl die erste Verbindung als auch die zweite Verbindung unterstützt oder in der Lage ist, diese herzustellen, wobei die Fähigkeitsanzeigeinformation Information bezüglich des ersten Mobilfunknetzes umfasst, wenn es sich mit dem zweiten Netz verbindet,
-- in einem zweiten Schritt empfängt das Benutzergerät (20) eine Mehrfachregistrierungsinformation, wobei die
Mehrfachregistrierungsinformation mindestens eine Information darüber umfasst, ob es dem Benutzergerät (20) erlaubt ist, sowohl die erste Verbindung als auch die zweite Verbindung aufzubauen.

2. Verfahren nach Anspruch 1, wobei in einem dritten Schritt im Anschluss an den zweiten Schritt das Benutzergerät (20) unter Verwendung der ersten und zweiten Verbindung und unter Verwendung eines Satzes von Berechtigungsnachweisen gleichzeitig mit dem ersten und zweiten Mobilfunknetz (100, 200) verbunden wird,
wobei vor dem dritten Schritt oder im Anschluss an den dritten Schritt die Bedingungen für die Nutzung der ersten und zweiten Verbindung ausgewertet werden,
wobei diese Auswertung durch das Benutzergerät (20) oder durch das erste und/oder zweite Mobilfunknetz (100, 200) durchgeführt wird.

3. Verfahren nach einem der vorhergehenden Ansprüche, wobei sich der von dem Benutzergerät (20) verwendete Satz von Anmeldeinformationen auf einen einzigen Satz von Anmeldeinformationen bezieht, um sich sowohl mit dem ersten Mobilfunknetz (100) als auch mit dem zweiten Mobilfunknetz (200) zu verbinden, wobei sich der einzige Satz von Anmeldeinformationen auf das erste Mobilfunknetz (100) oder auf das zweite Mobilfunknetz (200) oder sogar auf ein drittes Mobilfunknetz bezieht.

4. Verfahren nach einem der vorhergehenden Ansprüche, wobei das Benutzergerät (20) die Fähigkeitsanzeigeinformation als Teil von mindestens einer der folgenden Informationen überträgt:
-- einer Registrierungsanforderungsnachricht,
-- einer Zugriffsschichtkommunikation zwischen dem Benutzergerät (20) und dem Funkzugangsnetz,
-- eine Nicht-Zugangsschicht-Kommunikation zwischen dem Benutzergerät (20) und dem Kernnetz.

5. Verfahren nach einem der vorhergehenden Ansprüche, wobei die Information über das erste Mobilfunknetz bei der Verbindung mit dem zweiten Netz das Funkzugangsnetz des ersten Netzes und/oder die Information, dass das zweite Netz bereits mit dem ersten Netz verbunden ist, umfasst.

6. Verfahren nach einem der vorhergehenden Ansprüche, wobei die Fähigkeitsanzeigeinformation - neben der Information, ob das Benutzergerät (20) sowohl den Aufbau der ersten Verbindung als auch den Aufbau der zweiten Verbindung unterstützt oder dazu befähigt ist - mindestens eine der folgenden Informationen umfasst:
-- eine Information darüber, ob das Benutzergerät (20), das Teilnehmeridentitätsmodul und/oder die universelle integrierte Schaltkreiskarte des Benutzergeräts (20) unterstützt oder in der Lage ist, dass sowohl die erste Verbindung als auch die zweite Verbindung aufgebaut wird,
-- eine Information darüber, wie viele Mehrfachnetzregistrierungen das Benutzergerät (20) unterstützen kann,
-- eine Information darüber, welche Kombination von Funkzugangstechnologien und/oder Frequenzbändern unterstützt wird,
-- eine Information darüber, welche Kombination von Kerntechnologien unterstützt wird,
-- eine Information darüber, ob das Benutzergerät (20) bereits mit einem gegebenen Netz verbunden ist, und, falls ja, Informationen, die sich auf dieses Netz beziehen,
wobei sich die Fähigkeitsangaben auf eine vordefinierte Tabelle von Fähigkeitstypen beziehen, wobei jeder dieser Fähigkeitstypen so definiert ist, dass er Fähigkeitsaspekte bezüglich verschiedener Fähigkeitsdimensionen umfasst.

7. Verfahren nach einem der vorhergehenden Ansprüche, wobei die Mehrfachregistrierungsinformation - neben der Information, ob das Benutzergerät (20) sowohl die erste Verbindung als auch die zweite Verbindung aufbauen darf - mindestens eine der folgenden Informationen umfasst:
-- eine Information darüber, wie viele Mehrfachnetzregistrierungen das Benutzergerät (20) gleichzeitig aufrechterhalten darf, oder darüber, in wie vielen Mobilfunknetzen (100, 200) sich das Benutzergerät (20) gleichzeitig registrieren darf,
-- eine Information darüber, welche Zugangskombinationen das Benutzergerät (20) realisieren darf,
-- eine Information bezüglich der Netze und/oder Netzkombinationen, bei denen sich das Benutzergerät (20) gleichzeitig anmelden darf,
-- eine Information darüber, ob bei Mehrfachregistrierungen Orts- und/oder Zeitbedingungen von dem Benutzergerät (20) zu beachten sind und/oder eine Information darüber, welche Orts- und/oder Zeitbedingungen bei Mehrfachregistrierungen von dem Benutzergerät (20) zu beachten sind.

8. Verfahren nach einem der vorhergehenden Ansprüche, wobei in einem vierten Schritt nach dem zweiten Schritt das Benutzergerät (20) eine weitere Mehrfachregistrierungsinformation empfängt, wobei das Benutzergerät (20) die im zweiten Schritt empfangene Mehrfachregistrierungsinformation durch die weitere Mehrfachregistrierungsinformation ersetzt.

9. Verfahren nach einem der vorhergehenden Ansprüche, wobei - als Teil eines Mobilfunknetzes mit Netzfunktionen oder -diensten - Netzfunktionsfähigkeits-Anzeigeinformationen
-- von einer ersten Netzwerkfunktion/-dienst des Mobilfunknetzes übertragen wird, oder
-- zwischen einer ersten Netzwerkfunktion/-dienst und einer zweiten Netzwerkfunktion/-dienst des Mobilfunknetzes ausgetauscht werden,

10. Verfahren nach einem der vorhergehenden Ansprüche, wobei im Falle einer Roaming- oder Roaming-ähnlichen Situation des Benutzergeräts (20), in der das Benutzergerät (20) mit einem besuchten Mobilfunknetz verbunden ist, die von dem Benutzergerät (20) übertragene Fähigkeitsanzeigeinformation empfangen wird, die von dem Benutzergerät (20) gesendete Fähigkeitsanzeigeinformation außer von dem Heimat-Mobilfunknetz des Benutzergeräts (20) auch von dem besuchten Mobilfunknetz des Benutzergeräts (20) und gegebenenfalls auch von einem oder mehreren dazwischenliegenden Mobilfunknetzen, die das besuchte Mobilfunknetz und das Heimat-Mobilfunknetz des Benutzergeräts (20) verbinden, empfangen wird.

11. Benutzergerät (20) zum Betrieb mit einem Funkzugangsnetz eines Mobilfunknetz, wobei das Benutzergerät (20) in der Lage ist, gleichzeitig mit verschiedenen Mobilfunknetzen verbunden zu werden, die unterschiedliche Netzkennungsinformationen haben oder verwenden,
wobei solche unterschiedlichen Mobilfunknetze ein erstes Mobilfunknetz (100) und mindestens ein zweites Mobilfunknetz (200) umfassen, wobei das Benutzergerät (20) in der Lage ist, unter Verwendung einer ersten Verbindung bei dem ersten Mobilfunknetz (100) registriert zu werden, und wobei das Benutzergerät (20) ferner in der Lage ist, unter Verwendung einer zweiten Verbindung auch bei mindestens dem zweiten Mobilfunknetz (200) registriert zu werden,
wobei, damit das Benutzergerät (20) entweder mit einem oder mit beiden, dem ersten und/oder dem zweiten Mobilfunknetz (100, 200), verwendet werden kann, das Benutzergerät (20) derart konfiguriert ist, dass:
-- das Benutzergerät (20) eine Fähigkeitsanzeige-Information überträgt, wobei die Fähigkeitsanzeige-Information mindestens eine Information darüber umfasst, ob das Benutzergerät (20) sowohl die erste Verbindung als auch die zweite Verbindung unterstützt oder in der Lage ist, diese herzustellen, wobei die Fähigkeitsanzeige-Information Information bezüglich des ersten Mobilfunknetzes umfasst, wenn eine Verbindung mit dem zweiten Netz hergestellt wird,
-- das Benutzergerät (20) eine Mehrfachregistrierungsinformation empfängt, wobei die Mehrfachregistrierungsinformation mindestens eine Information darüber umfasst, ob es dem Benutzergerät (20) erlaubt ist, sowohl die erste Verbindung als auch die zweite Verbindung aufzubauen.

12. System oder Mobilfunknetz zum Betreiben eines Benutzergeräts (20) mit einem Funkzugangsnetz eines Mobilfunknetzes, wobei das Benutzergerät (20) in die Lage versetzt wird, gleichzeitig mit verschiedenen Mobilfunknetz verbunden zu werden, die unterschiedliche Netzkennungsinformationen haben oder verwenden,
wobei, um das System oder das Mobilfunknetz mit dem Benutzergerät (20) als ein erstes Mobilfunknetz (100) oder als ein zweites Mobilfunknetz (200) solcher unterschiedlicher Mobilfunknetze zu verwenden, das Benutzergerät (20) in der Lage ist, bei dem Mobilfunknetz als eine erste oder eine zweite Verbindung registriert zu werden, wobei eine weitere Verbindung ebenfalls möglich ist, das System oder das Mobilfunknetz so konfiguriert ist, dass:
-- das System oder das Mobilfunknetz von dem Benutzergerät (20) eine Fähigkeitsanzeigeinformation empfängt, wobei die Fähigkeitsanzeigeinformation mindestens eine Information darüber umfasst, ob das Benutzergerät (20) sowohl die erste Verbindung als auch die zweite Verbindung unterstützt oder aufbauen kann, wobei die Fähigkeitsanzeigeinformation Information bezüglich des ersten Mobilfunknetzes umfasst, wenn es sich mit dem zweiten Netz verbindet,
-- das System oder das Mobilfunknetz überträgt an das Benutzergerät (20) eine Mehrfachregistrierungsinformation, wobei die Mehrfachregistrierungsinformation mindestens eine Information darüber umfasst, ob es dem Benutzergerät (20) erlaubt ist, sowohl die erste Verbindung als auch die zweite Verbindung aufzubauen.

13. Programm, das einen computerlesbaren Programmcode umfasst, der, wenn er auf auf einem Computer und/oder auf einem Benutzergerät (20) und/oder auf einem Netzknoten eines Mobilfunknetzes (100) oder teilweise auf einem Benutzergerät (20) und/oder teilweise auf einem Netzknoten eines Mobilfunknetzes (100) ausgeführt wird, den Computer und/oder das Benutzergerät (20) und/oder den Netzknoten des Mobilfunknetzes (100) veranlasst, ein Verfahren nach einem der Ansprüche 1 bis 10 durchzuführen.

14. Computerlesbares Medium mit Befehlen, die, wenn sie auf einem Computer und/oder auf einem Benutzergerät (20) und/oder auf einem Netzknoten eines Mobilfunknetzes (100) oder teilweise auf einem Benutzergerät (20) und/oder teilweise auf einem Netzknoten eines Mobilfunknetzes (100) ausgeführt werden, den Computer und/oder das Benutzergerät (20) und/oder den Netzknoten des Mobilfunknetzes (100) veranlassen, ein Verfahren nach einem der Ansprüche 1 bis 10 durchzuführen.

## Revendications

1. Méthode pour faire fonctionner un équipement utilisateur (20) avec un réseau d'accès radio d'un réseau de communication mobile, dans laquelle l'équipement utilisateur (20) peut être connecté simultanément à différents réseaux de communication mobile qui ont, ou utilisent, différents éléments d'information d'identification de réseau,
dans lequel ces différents réseaux de communication mobile comprennent un premier réseau de communication mobile (100) et au moins un second réseau de communication mobile (200), dans lequel l'équipement utilisateur (20) peut être enregistré, en utilisant une première connexion, au premier réseau de communication mobile (100), et dans lequel l'équipement utilisateur (20) peut également être enregistré, en utilisant une seconde connexion, au moins au second réseau de communication mobile (200), dans lequel, afin d'utiliser l'équipement utilisateur (20) avec l'un ou l'autre, ou les deux, du premier et/ou du deuxième réseau de communication mobile (100, 200), le procédé comprend les étapes suivantes :
-- dans une première étape, l'équipement utilisateur (20) transmet une information d'indication de capabilité, l'information d'indication de capabilité comprenant au moins une information indiquant si l'équipement utilisateur (20) supporte, ou est capable, d'établir à la fois la première connexion et la seconde connexion, l'information d'indication de capabilité comprenant des informations concernant le premier réseau de communication mobile lors de la connexion au second réseau,
-- dans une deuxième étape, l'équipement utilisateur (20) reçoit une information d'enregistrement multiple, l'information d'enregistrement multiple comprenant au moins une information indiquant si l'équipement utilisateur (20) est autorisé à établir à la fois la première et la deuxième connexion.

2. Procédé selon la revendication 1, dans lequel, dans une troisième étape suivant la deuxième étape, l'équipement utilisateur (20) est connecté simultanément au premier et au deuxième réseau de communication mobile (100, 200) en utilisant la première et la deuxième connexion et en utilisant un ensemble d'informations d'identification,
dans lequel, avant la troisième étape ou après la troisième étape, les conditions d'utilisation de la première et de la deuxième connexion sont évaluées,
cette évaluation est effectuée par l'équipement utilisateur (20) ou par le premier et/ou le deuxième réseau de communication mobile (100, 200).

3. Procédé selon l'une des revendications précédentes, dans lequel l'ensemble d'informations d'identification utilisé par l'équipement utilisateur (20) se réfère à un seul ensemble d'informations d'identification pour se connecter à la fois au premier réseau de communication mobile (100) et au deuxième réseau de communication mobile (200), dans lequel l'ensemble unique d'informations d'identification se réfère au premier réseau de communication mobile (100), ou au deuxième réseau de communication mobile (200), ou même à un troisième réseau de communication mobile.

4. Procédé selon l'une des revendications précédentes, dans lequel l'équipement utilisateur (20) transmet les informations d'indication de capabilité dans le cadre d'au moins l'un des éléments suivants :
-- un message de demande d'enregistrement,
-- une communication de strate d'accès entre l'équipement utilisateur (20) et le réseau d'accès radio,
-- une communication de strate de non-accès entre l'équipement utilisateur (20) et le réseau central.

5. Procédé selon l'une des revendications précédentes, dans lequel les informations concernant le premier réseau de communication mobile lors de la connexion au deuxième réseau comprennent le réseau d'accès radio du premier réseau et/ou des informations informant le deuxième réseau qu'il est déjà connecté au premier réseau.

6. Procédé selon l'une des revendications précédentes, dans lequel les informations d'indication de capabilité comprennent - outre l'information indiquant si l'équipement utilisateur (20) prend en charge, ou est en mesure d'établir à la fois la première et la deuxième connexion - au moins l'une des informations suivantes :
-- une information indiquant si l'équipement utilisateur (20), le module d'identité d'abonné et/ou la carte à circuit intégré universelle de l'équipement utilisateur (20) support ou est en mesure d'établir à la fois la première et la seconde connexion,
-- une information concernant le nombre d'enregistrements de réseaux multiples que l'équipement utilisateur (20) est capable de supporter,
-- un élément d'information concernant quelle combinaison de technologies d'accès radio et/ou de bandes de fréquences sont suppportées,
-- une information concernant la combinaison de technologies centrales prises en charge,
-- une information indiquant si l'équipement utilisateur (20) est déjà connecté à un réseau donné et, dans l'affirmative, une information relative à ce réseau,
dans lequel les informations d'indication de capabilité se réfèrent à un tableau prédéfini de types de capabilités, chacun de ces types de capabilités étant défini comme comprenant des aspects de capabilité concernant différentes dimensions de capabilité.

7. Procédé selon l'une des revendications précédentes, dans lequel les informations d'enregistrement multiple comprennent - outre l'information indiquant si l'équipement utilisateur (20) est autorisé à établir à la fois la première et la seconde connexion - au moins l'une des informations suivantes :
-- une information concernant le nombre d'enregistrements de réseaux multiples que l'équipement utilisateur (20) est autorisé à maintenir simultanément ou concernant le nombre de réseaux de communication mobile (100, 200) auxquels l'équipement utilisateur (20) est autorisé à s'enregistrer simultanément,
-- une information concernant les combinaisons d'accès que l'équipement utilisateur (20) est autorisé à réaliser,
-- un élément d'information concernant les réseaux et/ou les combinaisons de réseaux auprès desquels l'équipement utilisateur (20) est autorisé à s'enregistrer simultanément,
-- un élément d'information concernant les conditions de localisation et/ou de temps que l'équipement utilisateur (20) doit respecter en cas d'enregistrements multiples et/ou un élément d'information concernant les conditions de localisation et/ou de temps que l'équipement utilisateur (20) doit respecter en cas d'enregistrements multiples.

8. Procédé selon l'une des revendications précédentes, dans lequel, dans une quatrième étape suivant la deuxième étape, l'équipement utilisateur (20) reçoit une autre information d'enregistrement multiple, dans lequel l'équipement utilisateur (20) remplace l'information d'enregistrement multiple reçue dans la deuxième étape par l'autre information d'enregistrement multiple.

9. Procédé selon l'une des revendications précédentes, dans lequel - en tant que partie d'un réseau de communication mobile comprenant des fonctions ou services de réseau - l'information d'indication de capacité de fonction de réseau est
-- transmises par une première fonction ou service de réseau du réseau de communication mobile, ou
-- échangées entre une première fonction ou service de réseau et une deuxième fonction ou service de réseau du réseau de communication mobile,

10. Procédé selon l'une des revendications précédentes, dans lequel - dans le cas d'une situation d'itinérance ou de type itinérance de l'équipement utilisateur (20), où l'équipement utilisateur (20) est connecté à un réseau de communication mobile visité - l'information d'indication de capabilité, transmise par l'équipement utilisateur (20), est reçue, non seulement par le réseau de communication mobile d'origine de l'équipement utilisateur (20), mais aussi par le réseau de communication mobile visité de l'équipement utilisateur (20) et, le cas échéant, par un ou plusieurs réseaux de communication mobile intermédiaires reliant le réseau de communication mobile visité et le réseau de communication mobile d'origine de l'équipement utilisateur (20).

11. Équipement utilisateur (20) destiné à être opéré avec un réseau d'accès radio d'un réseau de communication mobile, dans lequel l'équipement utilisateur (20) peut être connecté simultanément à différents réseaux de communication mobile qui possèdent ou utilisent différents éléments d'information d'identification de réseau,
dans lequel ces différents réseaux de communication mobile comprennent un premier réseau de communication mobile (100) et au moins un deuxième réseau de communication mobile (200), dans lequel l'équipement utilisateur (20) peut être enregistré, en utilisant une première connexion, au premier réseau de communication mobile (100), et dans lequel l'équipement utilisateur (20) peut également être enregistré, en utilisant une deuxième connexion, au moins au deuxième réseau de communication mobile (200), dans lequel, pour que l'équipement utilisateur (20) soit utilisé avec l'un ou l'autre, ou les deux, du premier et/ou du deuxième réseau de communication mobile (100, 200), l'équipement utilisateur (20) est configuré de manière à ce que :
-- l'équipement utilisateur (20) transmet une information d'indication de capabilité, l'information d'indication de capabilité comprenant au moins une information indiquant si l'équipement utilisateur (20) supporte, ou est capable, d'établir à la fois la première connexion et la seconde connexion, l'information d'indication de capabilité comprenant des informations concernant le premier réseau de communication mobile lors de la connexion au second réseau,
-- l'équipement utilisateur (20) reçoit une information d'enregistrement multiple, l'information d'enregistrement multiple comprenant au moins une information indiquant si l'équipement utilisateur (20) est autorisé à établir à la fois la première et la seconde connexion.

12. Système ou réseau de communication mobile pour faire fonctionner un équipement utilisateur (20) avec un réseau d'accès radio d'un réseau de communication mobile, dans lequel l'équipement utilisateur (20) peut être connecté simultanément à différents réseaux de communication mobile qui ont, ou utilisent, différents éléments d'information d'identification de réseau, dans lequel, afin d'utiliser le système ou le réseau de communication mobile, avec l'équipement utilisateur (20), comme un premier réseau de communication mobile (100) ou comme un second réseau de communication mobile (200) de ces différents réseaux de communication mobile, l'équipement utilisateur (20) pouvant être enregistré, auprès du réseau de communication mobile, comme une première ou une seconde connexion lorsqu'une autre connexion est également possible, le système ou le réseau de communication mobile est configuré de manière à ce que :
-- le système ou le réseau de communication mobile reçoit, de l'équipement utilisateur (20), une information d'indication de capabilité, l'information d'indication de capabilité comprenant au moins un élément d'information indiquant si l'équipement utilisateur (20) supporte, ou est capable d'établir, à la fois la première et la seconde connexion, l'information d'indication de capabilité comprenant des informations concernant le premier réseau de communication mobile lors de la connexion au second réseau,
-- le système ou le réseau de communication mobile transmet à l'équipement utilisateur (20) une information d'enregistrement multiple, l'information d'enregistrement multiple comprenant au moins une information indiquant si l'équipement utilisateur (20) est autorisé à établir à la fois la première et la seconde connexion.

13. Programme comprenant un code de programme lisible par ordinateur qui, lorsqu'il est exécuté sur un ordinateur et/ou sur un équipement utilisateur (20) et/ou sur un nœud de réseau d'un réseau de communication mobile (100), ou en partie sur un équipement utilisateur (20) et/ou en partie sur un nœud de réseau d'un réseau de communication mobile (100), amène l'ordinateur et/ou l'équipement utilisateur (20) et/ou le nœud de réseau du réseau de communication mobile (100) à exécuter un procédé selon l'une des revendications 1 à 10.

14. Support lisible par ordinateur comprenant des instructions qui, lorsqu'elles sont exécutées sur un ordinateur et/ou sur un équipement utilisateur (20) et/ou sur un nœud de réseau d'un réseau de communication mobile (100), ou en partie sur un équipement utilisateur (20) et/ou en partie sur un nœud de réseau d'un réseau de communication mobile (100), amènent l'ordinateur et/ou l'équipement utilisateur (20) et/ou le nœud de réseau du réseau de communication mobile (100) à exécuter un procédé selon l'une des revendications 1 à 10.
